(19) Europäisches Patentamt
European Patent Office
Office européen des brevets

(11) EP 0 263 428 B2

(12) NEW EUROPEAN PATENT SPECIFICATION

(45) Date of publication and mention of the opposition decision:
**30.07.1997 Bulletin 1997/31**

(51) Int Cl.⁶: **C09D 183/04**

(45) Mention of the grant of the patent:
**04.08.1993 Bulletin 1993/31**

(21) Application number: **87114253.5**

(22) Date of filing: **30.09.1987**

# (54) Organosiloxane/metal oxide coatings

Beschichtungszusammensetzungen auf der Basis von Siloxanen und Metalloxiden

Compositions de revêtement à base de polysiloxanes et d'oxydes métalliques

(84) Designated Contracting States:
**DE ES FR GB IT NL SE**

(30) Priority:
**03.10.1986 US 914856**
**03.10.1986 US 914857**
**03.10.1986 US 914858**
**03.10.1986 US 914859**
**03.10.1986 US 914860**
**03.10.1986 US 914920**
**03.10.1986 US 915344**
**03.10.1986 US 915346**

(43) Date of publication of application:
**13.04.1988 Bulletin 1988/15**

(60) Divisional application: **92100915.5**

(73) Proprietor: **PPG INDUSTRIES, INC.**
**Pittsburgh Pennsylvania 15272 (US)**

(72) Inventors:
- **Lin, Chia-Cheng**
  **Gibsonia, Pa. 15044 (US)**
- **Yoldas, Bulent Erturk**
  **Pittsburgh, Pa. 16201 (US)**
- **Hunia, Robert Michael**
  **Kittanning, Pa. 16201 (US)**
- **Basil, John Darwin**
  **Pittsburgh, Pa. 15239 (US)**
- **Falleroni, Charlene Ann**
  **New Kensington, Pa. 15068 (US)**

(74) Representative:
**Sternagel, Hans-Günther, Dr. et al**
**Patentanwälte Dr. Michael Hann**
**Dr. H.-G. Sternagel,**
**Sander Aue 30**
**51465 Bergisch Gladbach (DE)**

(56) References cited:
**EP-A- 0 009 947**
**EP-A- 0 078 548**
**EP-A- 0 171 493**
**EP-A- 0 233 355**
**DD-A- 65 457**
**DE-A- 1 795 673**
**GB-A- 728 751**
**GB-A- 1 107 295**
**SU-A- 679 648**
**US-A- 3 433 750**
**US-A- 4 043 953**
**US-A- 4 434 103**
**US-A- 4 560 784**

- **CHEMICAL ABSTRACTS, vol. 97, no. 16, 16th January 1982, page 638, abstract no. 136682j, Columbus, Ohio, US; & JP-A-57 008 522**
- **DATABASE WPI, no. 77-80037, Derwent Publications Ltd, London, GB; & JP-A-52 114 628**
- **DATABASE WPI, no. 81-78477, Derwent Publications Ltd, London, GB; & JP-A-56 114 904**
- **DATABASE WPIL, no. 86-116628, Derwent Publications Ltd, London, GB; & JP-A-61 057 389**
- **DATABASE WPI, no. 79-91865, Derwent Publications Ltd, London, GB; & JP-A-54 144 500**
- **W. Noll, Chemie und Technologie der Silicone, Verl. Chemie, 1968, 162-179**
- **Nat. Res. Soc. Symp. Proc. Vol.73, 1986, p. 739-742**
- **Am. Chem. Soc. Div. Polym. Chemie 26., 1986, p. 300**
- **K. Winnacker, L.Küchler, Chem. Techn., Vol. 2, Anorgan. Techn. I, 4. Ed., Hanser Verl., 1982, p. 704**

Remarks:
Divisional application 92100915.5 filed on 30/09/87.

EP 0 263 428 B2

Printed by Jouve, 75001 PARIS (FR)

## Description

### Field of the Invention

The present invention relates generally to the art of abrasion-resistant coatings, and more particularly to the art of abrasion-resistant inorganic coatings on abrasion-prone organic substrates.

### Background

A number of patents to Yoldas and other disclose sol-gel compositions containing various components. U.S. Patent Nos. 3,941,719 and 3,944,658 to Yoldas relate to alumina sol-gels. U.S. Patents No. 4.208.475 and 4,244,986 to Paruso and Yoldas describe a liquid polymer formed from organometallic sodium and aluminum compounds.

U. S. Patent No. 4,271,210 to Yoldas discloses a method of forming an optically clear, porous metal oxide layer having a low refractive index on a glass substrate by dipping the substrate into a clear colloidal solution of metal alkoxide.

U.S. Patent No. 4,278,632 to Yoldas discloses a method of forming a clear vitreous gel of silica-titania binary by preparing a clear organic solvent solution of partially hydrolyzed alkoxide of either silicon or titanium and then adding the other element in the form of alkoxide or a clear organic solvent solution of partially hydrolyzed alkoxide. The components are reacted, additional water is added to complete hydrolysis and the resulting product is then dried and heated to remove residual organic material.

U. S. Patent No. 4,286,024 to Yoldas discloses a high temperature resistant transparent monolithic member or coating consisting of aluminum and silicon in a ratio of about 2:1 and in reacted oxide form, formed by reacting precursor alkoxides of aluminum and silicon in the presence of water to form a clear solution, gelling the reacted precursors, and drying the gel in the form of a monolithic member or coating on a substrate. The dried material is then heated to evolve all residual hydrogen, carbon and water and to eliminate porosity.

U.S. Patent No. 4,346,131 to Yoldas discloses polymerized solutions for depositing optical oxide coatings prepared by reacting metal alkoxide with a mixture of critical amounts of water and/or acid in an alcohol medium. The alkoxides may be titanium, tantalum and/or silicon.

According to these patents, hydrolytic polycondensation of metal alkoxides produces polymeric species containing alkoxy and hydroxyl pendent and terminal groups. Typical sol-gel compositions contain about 10 to 40 percent by weight organic and hydroxyl components. Heat treatment is carried out at sufficiently high temperature, generally around 500°C, to remove residual organic material.

Optical quality abrasion resistant coated plastic materials generally require a coating that protects the substrate from the damaging effects of ultraviolet (UV) radiation. Protection from ultraviolet radiation is especially important for polycarbonate, since hydrolytic degradation is apparently accelerated by UV exposure. Conventional UV stabilizers do not impart sufficient protective capacity to abrasion resistant coatings, as sufficient amounts of most typical organic UV absorbers cannot be added to abrasion resistant coatings without adversely affecting hardness and adhesion of the coating. Moreover, typical UV absorbers may gradually become deactivated after prolonged exposure, and also may gradually be leached from the composition.

### Summary of the Invention

It is an oject of the present invention to provide a process of manufacturing a composition of matter which process comprises:

(a) partially hydrolyzing an organoalkoxysilane having the general formula

$$R_xSi(OR')_{4-x} \qquad (I)$$

wherein R is an organic radical, R' is a low molecular weight alkyl radical and x is at least 1 and less than 4;

(b) reacting the partially hydrolized organoalkoxysilane of step (a) with one or more metal alkoxides of the general formula

$$M(OR'')_z \qquad (II)$$

wherein M is a metal which forms a hydrolyzable alkoxide, z is the valence of M, and R" is a low molecular weight

alkyl radical; and
(c) completely hydrolysing the reaction product of step (b);

with the proviso that said reaction step (b) is being performed before the partially hydrolyzed organoalkoxysilane of step (a) stands so long that condensation reactions proceed to eliminate active silanole groups.

It is another object of the present invention to provide a modification of the afore-said process which modification consists in employing an additional amount of cerium oxide sol.

The present invention provides an abrasion-resistant coating composition comprising an organoalkoxysilane and a hydrolyzable compound of a metal such as titanium or zirconium. Such a composition is formed by producing active soluble and polymerizable titanium or zirconium species from titanium or zirconium alkoxides and dispersing or polymerizing the titanium or zirconium species into silicon-oxygen networks of organosiloxane polymers via reaction with silanol groups. The presence of titanium or zirconium in the polymer network modifies. such properties as the hardness and refractive index of the polymer. When such a titanium or zirconium modified polymer coating is applied to a plastic substrate surface, the coating increases the chemical resistance, index of refraction and blocking of ultraviolet radiation, in addition to the abrasion resistance.

The present invention, in addition to providing abrasion resistance, involves also optimizing a variety of properties such as alkali resistance, adhesive strength, chemical resistance, water stability and index of refraction for optical coatings. The present invention encompasses a multi-component system combining an organoalkoxysilane composition with a combination of other components such as hydrolyzable alkoxides of aluminum, titanium, tantalum, hafnium and the like to form an inorganic oxide polymer network optimizing overall performance. The organoalkoxysilane/mixed metal alkoxides composition can be coated on glass, metals and ceramics, as well as on plastics, not only for abrasion resistance, but also for chemical resistance, e.g., to alkali or oxidation. The organoalkoxysilane/mixed metal alkoxides composition may also function as a carrier and binder for pigments to form opaque and/or colored coatings. An important feature of the present invention is that the proportion of metal alkoxides can be selected to produce a coating with a desired refractive index, e.g., to match a transparent substrate.

The present invention provides protection for underlying plastic substrates such as polycarbonate from damaging ultraviolet radiation by means of transparent coatings containing cerium oxide, a stable strongly ultraviolet absorbing species. The transparent cerium oxide containing UV protective coatings of the present invention are formed from aqueous sols containing colloidal cerium oxide in addition to alkoxides of silicon and/or other metals which hydrolyze and polymerize by condensation to form a film in which the cerium is incorporated in the oxide network of the coating.

The present invention further provides a method for incorporating metal such as titanium or zirconium into the polymer network structure of an organoalkoxysilane in an aqueous medium. The method of the present invention involves initial partial hydrolysis of the organoalkoxysilane, reaction of a metal alkoxide of titanium or zirconium with essentially anhydrous partially hydrolyzed organoalkoxysilane, and final complete hydrolysis of the sol-gel composition. The aqueous compositions of the present invention deposit harder, more abrasion-resistant, and higher optical quality coatings than organic solvent compositions.

## Detailed Description of the Preferred Embodiment

A multi-component organoalkoxysilane/mixed metal alkoxides composition is prepared in accordance with the present invention in order to provide a coating with superior abrasion resistance, as well as alkali resistance and chemical resistance, which can be pigmented and coated on metal, ceramic and glass surfaces, as well as on plastics, and the refractive index of which may be matched to that of a transparent substrate for optical applications.

Preferably, an organoalkoxysilane is first partially hydrolyzed by adding a less than equivalent quantity of water to an organoalkoxysilane in solution, preferably in alcohol. The organoalkoxysilane has the general formula

$$R_xSi(OR')_{4-x}$$

wherein R is an organic radical, R' is low molecular weight alkyl radical, and x is at least one and less than 4; preferably x is 1, so that the organoalkoxysilane has three hydrolyzable sites. The organic radical R is preferably a lower ($C_1$ to $C_6$) alkyl or vinyl, methoxyethyl, phenyl, γ-glycidoxypropyl or γ-methacryloxypropyl. Preferably, R' is selected from the group consisting of methyl, ethyl. propyl and butyl. Preferred organoalkoxysilanes include those wherein R is methyl and R' is ethyl, particularly methyl triethoxysilane. Another preferred organoalkoxysilane is γ-glycidoxypropyl trimethoxysilane. Mixtures of organoalkoxysilanes may also be preferred. Preferably about one mole of water per mole or organoalkoxysilane is added in alcohol medium to partially hydrolyze the organoalkoxysilane according to the general reaction

$$R_xSi(OR')_{4-x} + yH_2O \rightarrow R_x\ Si(OR')_{4-x-y}(OH)_y + yR'OH$$

After the organoalkoxysilane is partially hydrolyzed, additional metal ions are incorporated in the composition by adding hydrolyzable metal alkoxides to the partially hydrolyzed organoalkoxysilane. Preferably, these additional metal alkoxides include alkoxides of the general formula

$$M(OR'')_z$$

wherein M is a metal selected from the group consisting of aluminum titanium, zirconium and mixtures thereof, z is the valence of M and R" is a low molecular weight alkyl radical, preferably ethyl, propyl or butyl. In addition to aluminum, titanium and/or zirconium, other metal alkoxides including such metals as tantalum, hafnium, etc., may be employed. The metal alkoxide may include an alkyl or aryl group or be in dimer or higher condensed form so long as hydrolyzable alkoxy groups remain reactive with silanol groups of the partially hydrolyzed organoalkoxysilane to copolymerize.

When metal alkoxides or alkylalkoxides are introduced into the partially hydrolyzed organoalkoxysilane, the hydrolyzable alkoxy groups react with the hydroxyl bonds of the partially hydrolyzed organoalkoxysilane, condensing to form an inorganic oxide network and producing alcohol according to the general reaction:

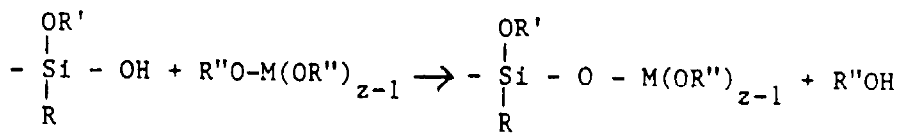

Once the metal alkoxide is reacted with the organoalkoxysilane by this reaction, the composition may be fully hydrolyzed by the addition of water, converting the alkoxy groups OR' and OR" to hydroxyl groups without precipitation of insoluble metal hydroxides. Condensation polymerization proceeds to extend the inorganic oxide network. The composition may then be diluted with either water, alcohol or other suitable solvent to the concentration desired for applying a coating to a substrate. Using titanium alkoxides in conjunction with zirconium, aluminum and silicon alkoxides in various ratios provides coatings with refractive indices within the range of 1.4 to 1.85 for optical coating applications.

In a preferred embodiment of the present invention, an alkoxide is partially hydrolyzed before adding an aqueous sol of colloidal cerium oxide. Preferably, the alkoxide is an alkoxysilane of the general formula $R_xSi(OR')_{4-x}$ wherein R is an organic radical, R' is selected from the group consisting of low molecular weight alkyl radicals, and x is less than 4 and may be zero. The organic radical of R is preferably alkyl, vinyl, methoxyethyl, phenyl, γ-glycidoxypropyl, or γ-methacryloxypropyl. The alkoxide hydrolyzes according to the general reactions

$$R_xSi(OR')_{4-x} + yH_2O\ R_xSi(OR')_{4-x-y}(OH)_y + yR'OH.$$

Condensation of the hydrolyzed alkoxide proceeds according to the general reactions

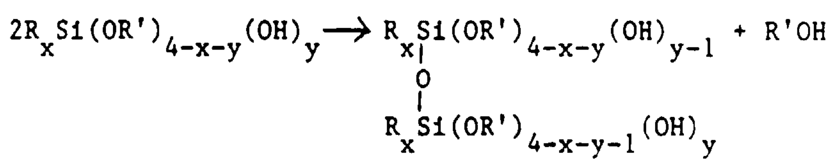

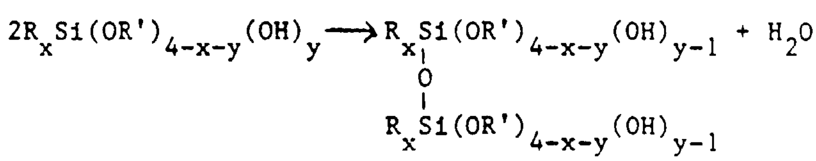

Further hydrolysis and condensation follow.

The pH and/or degree of condensation of the alkoxides may be adjusted, if necessary, to prevent haze or precipitation upon mixing with the ceria sol. The cerium oxide sol preferably comprises about 10 to 30 percent by weight colloidal cerium oxide in water, with the colloidal cerium oxide particle size sufficiently small to minimize scattering of visible light, preferably less than 30 to 40 nanometers, most preferably less than 10 nanometers. Alkoxides of titanium and/or zirconium may also be included in compositions of the present invention, as well as colloidal silica for abrasion resistance. The ultraviolet radiation protection provided by the cerium oxide containing coating of the present invention may be determined by measuring the UV absorbance spectrum of the coating applied on a quartz substrate.

An aqueous composition of organoalkoxysilane and metal alkoxide is prepared by first partially hydrolyzing an organoalkoxysilane with water. A less than equivalent quantity of water is added to an organoalkoxysilane of the general formula $R_xSi(OR')_{4-x}$ wherein R is an organic radical, R' is a low molecular weight alkyl radical, and x is at least one and less than four. Preferably x is one, so that the organoalkoxysilane has three hydrolyzable sites. Partial hydrolysis requires, in this case, less than three moles of water per mole of monomeric organoalkoxysilane. Preferably, about one mole of water is added to partially hydrolyze the preferred organoalkoxysilane according to the following general reaction

$$R_xSi(OR')_{4-x} + yH_2O \rightarrow R_xSi(OR')_{4-x-y}(OH)_y + yR'OH$$

Because the organoalkoxysilane and water are immiscible, a small amount of cosolvent is preferably added. Preferably, a small amount of alcohol is added to promote miscibility and, if necessary, a small amount of catalyst such as nitric acid to accelerate hydrolysis. Preferred organoalkoxysilanes are those wherein x is 1, R is selected from the group consisting of lower (preferably one to six carbon) alkyl or vinyl, methoxyethyl, phenyl, γ-glycidoxypropyl and γ-methacryloxypropyl and R' is selected from the group consisting of methyl, ethyl, propyl and butyl. Mixtures of organoalkoxysilanes may be preferred. It is crucial to the practice of the invention that during the initial partial hydrolysis of the organoalkoxysilane, essentially all of the water is consumed in the hydrolysis step. It is also crucial that the partially hydrolyzed organoalkoxysilane cannot be allowed to stand so long that the condensation polymerization reactions

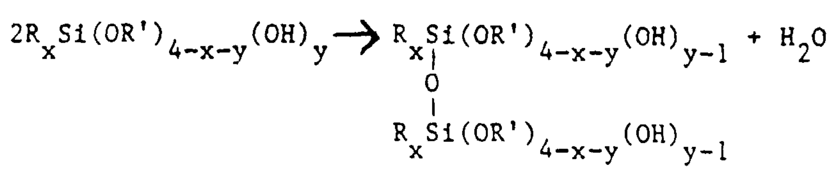

or

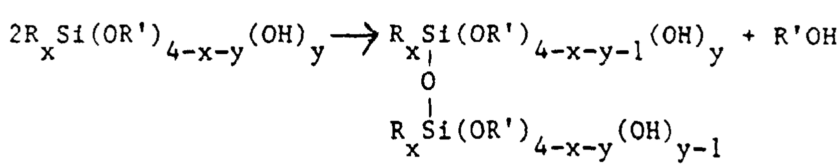

proceed to eliminate active silanol groups needed for reaction with the titanium or zirconium alkoxides to be added.

The second step involves incorporation of metal ions into the organoalkoxysilane network by the addition of a metal alkoxide of the general formula $M(OR'')_z$ wherein M is preferably titanium or zirconium, R" is a low molecular weight alkyl radical, preferably containing two to four carbons, and z is the valence of M. The metal alkoxide may comprise an alkyl or aryl radical and may be in dimer or higher condensed form so long as the alkoxide contains hydrolyzable groups reactive with silanol groups to copolymerize. Because titanium and zirconium alkoxides also hydrolyze in water, and form insoluble hydroxide species which precipitate from an aqueous medium, the titanium or zirconium alkoxide must be added to the partially hydrolyzed organoalkoxysilane in the essential absence of water. The addition of titanium or zirconium alkoxide to the partially hydrolyzed organoalkoxysilane results in the copolymerization of an inorganic oxide network wherein titanium or zirconium ions are interspersed with silicon according to the following general reaction

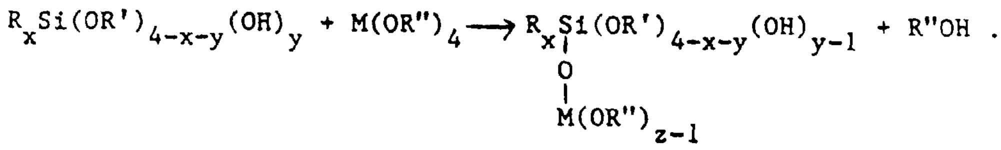

The copolymerization reaction must proceed essentially to completion, i.e., essentially all the titanium or zirconium alkoxide must be reacted into the polymer network. Titanium or zirconium may also be introduced into the partially hydrolyzed organoalkoxysilane in the form of clear polymer solutions wherein hydrolyzable alkoxy groups remain reactive with silanol groups of the partially hydrolyzed organoalkoxysilane.

The final step involves addition of a large quantity of water to essentially completely hydrolyze the composition, i. e., all remaining hydrolyzable groups of either the silane or the titanium or zirconium alkoxide are hydrolyzed according to the general reaction:

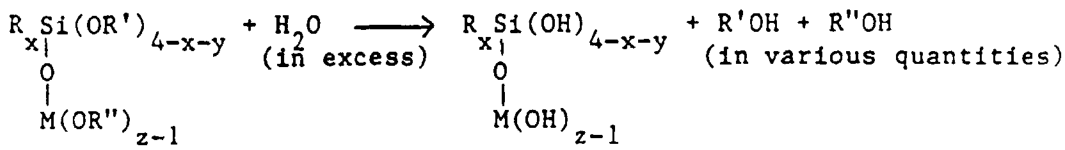


Because any unincorporated titanium or zirconium alkoxide would hydrolyze to form insoluble hydroxides which would precipitate from the aqueous medium, the water must be added in the essential absence of unreacted titanium or zirconium alkoxide.

The resultant composition is an essentially aqueous organoalkoxysilane/metal oxide sol-gel composition which may be dried and cured to form an inorganic oxide network according to the following condensation polymerization reaction

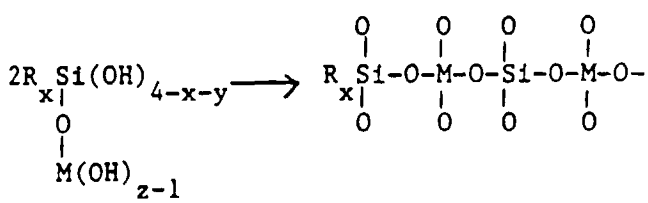

wherein silicon and metal ions are proportionately dispersed throughout the oxide network. The siloxane/metal oxide polymer may be in the form of a monolithic article, or may be applied as a coating composition to the surface of a substrate to form a glassy film. Applied to a plastic substrate such as polycarbonate or acrylic, a silane/metal oxide coating of the present invention has superior abrasion resistance to that of a silane/alumina or other organic solvent based abrasion resistant coating.

Preferably, the fully hydrolyzed composition is applied by any conventional procedure such as spraying, dipping or flow coating onto a surface of a substrate. The coating composition is dried to remove alcohol and water solvents, and then heated to promote the continued condensation polymerization of the composition, and curing to a dense glassy abrasion resistant film.

However, the inorganic polymer still contains some residual alkoxy groups. When the composition is subsequently fired to densify the inorganic polymer, and residual organic material will be eliminated by thermal decomposition. However, thermal decomposition of residual organic material may result in carbon deposits which blacken the inorganic polymer and degrade the integrity of the metal/oxide network.

In accordance with the present invention, the dried gel, whether in monolithic or coating form, is treated with water or other aqueous solvent, such as inorganic acid or hydrogen peroxide, to remove residual organic material by solid-state hydrolysis before the gel is fired. Thus, the inorganic polymer is not blackened or degraded by carbon deposition. When the composition is dried to remove the solvent, the alcohol and water formed in the hydrolysis and condensation reactions are removed as well.

Substrates which can be improved in their abrasion resistance and other properties with the organoalkoxysilane/metal oxide compositions of the present invention include polycarbonate and acrylic, particularly as used for vehicle transparencies. Abrasion resistance is measured by ASTM F-735 abrasion testing (Bayer abrasion) using 1000 grams

of quartz sand of 6 to 14 mesh size range for 300 cycles. Coating compositions of the present invention may also be used on nonplastic substrates such as glass, ceramics and metals to improve corrosion resistance or other properties.

The present invention will be further understood from the descriptions of specific examples which follow.

EXAMPLE 1

An abrasion resistant coating composition is prepared as follows. A solution is prepared comprising 100 grams of γ-glycidoxypropyl trimethoxysilane

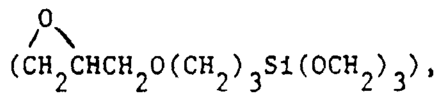

100 grams of ethyl alcohol, 8 grams of water for hydrolysis and 0.3 grams of nitric acid. The solution is stirred for 10 minutes at room temperature to partially hydrolyze the organoalkoxysilane and completely react the water. A clear sol is formed, to which is added 40 grams of titanium tetraethoxide ($Ti(OC_2H_5)_4$). The mixture is stirred for 20 minutes to completely react the titanium tetraethoxide with the partially hydrolyzed organoalkoxysilane. Finally, an additional 20 grams of water is introduced to complete the hydrolysis of the organoalkoxysilane/titania composition, along with an additional 60 grams of alcohol to adjust the solution concentration to a suitable level for coating application.

A polycarbonate substrate is cleaned, primed with an aminosilane by dipping for 7 minutes into A1120 from Union Carbide, rinsing with 2-propanol then water, and drying for half an hour at 60°C to 80°C. The primed substrate is then immersed into the above-described organoalkoxysilane/titania composition, and withdrawn at a rate of 10 centimeters per minute. The coated substrate is heated to 130°C in an oven and held at that temperature for 2 hours to cure the coating. After cooling to room temperature, the coated substrate is subjected to 300 cycles of Bayer abrasion using 1000 grams of quartz sand of 6 to 14 mesh size. Following the abrasion testing, the coated substrate measures 3.6 percent haze, compared with 60 to 65 percent haze for an uncoated polycarbonate substrate after 300 cycles of Bayer abrasion testing.

EXAMPLE 2

A partially hydrolyzed organoalkoxysilane sol is prepared by combining 100 grams of γ-glycidoxypropyl trimethoxysilane

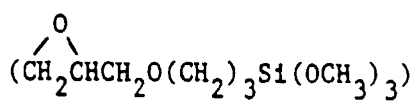

in 100 grams of ethanol with 8 grams of water and 0.2 grams of nitric acid and stirring for 10 minutes at ambient temperature. To this partially hydrolyzed organoalkoxysilane are added 20 grams of zirconium n-propoxide ($Zr(OC_3H_7)^n_4$) and 10 grams of titanium ethoxide ($Ti(OC_2H_5)_4$). The composition is stirred at ambient temperature for 20 minutes to allow copolymerization of the metal alkoxides with the partially hydrolyzed organoalkoxysilane. Finally, 20 grams of water and an additional 60 grams of ethanol are added to fully hydrolyze the composition and dilute it for coating application.

A polycarbonate substrate is cleaned and primed by dipping in aminosilane (A1120 from Union Carbide) for 7 minutes, rinsing in 2-propanol then water, and drying for 30 minutes at 60°C to 80°C. The primed polycarbonate is then coated by dipping into the coating composition of this example for 1 minute. drying in air at ambient temperature and curing at 130°C for 2 hours. The index of refraction of the coating is 1.6 compared to 1.54 for a comparable coating without the titanium.

EXAMPLE 3

An aqueous organoalkoxysilane/titania composition is prepared as follows. First, to 100 grams of γ-glycidoxypropyl trimethoxysilane are added 40 grams of 2-propanol, 8 grams of deionized water and 10 drops of nitric acid. The mixture is stirred for 15 minutes to complete the partial hydrolysis of organoalkoxysilane without allowing significant condensation polymerization. Next is added 30 grams of tetraethyl titanate. Stirring is continued for 30 minutes to ensure complete reaction of the titanate with the partially hydrolyzed organoalkoxysilane. Finally added are 170 grams of deionized water and 2 grams of ammonium perchlorate to completely hydrolyze the composition. Stirring is continued until a clear sol is formed. Before the composition is applied as a coating, 2 drops of surfactant may be added to promote wetting. A suitable surfactant is Zonyl FSN from DuPont.

A polycarbonate substrate 1/8 inch (about 3 millimeters) thick is primed with an aminosilane by dipping for 7 minutes in A-1120 from Union Carbide, rinsing with 2-propanol then water, and drying for 30 minutes at 60°C to 80°C. The primed substrate is dipped into the above-described composition for 1 minute. After air-drying for half an hour, the coating is heated from 40°C to 130°C over a period of one hour and held at 130°C for 3 hours to cure the coating. After cooling to room temperature, the coated substrate's optical properties are measured as 88.9 percent transmittance and 0.3 percent haze. After Bayer abrasion testing of 300 cycles with 1000 grams of quartz sand of 6 to 14 mesh size according to ASTM F-735, the optical properties of the coated substrate are 88.8 percent transmittance and 2.1 percent haze, compared to 60 to 65 percent haze for uncoated polycarbonate after 300 cycles of Bayer abrasion testing.

The above examples are offered to illustrate the present invention. Various organoalkoxysilanes may be employed in accordance with the present invention in a wide range of proportions with various aluminum, titanium, zirconium and other metal alkoxides in different combinations and in a wide range of proportions and concentrations, and cured using different temperatures and cycles to optimize desirable properties in the coating. Additives such as surfactants, wetting agents, ultraviolet radiation absorbers, fillers, pigments and flow control and other additives may be included in coating compositions of the present invention which may be prepared in a variety of alcohol or other organic solvents, or in essentially aqueous media in any amount which does not interfere with network formation. Various plastic substrates may be coated with the silane/metal oxide compositions of the present invention e.g. to improve abrasion resistance. Nonplastic substrates such as glass may be painted with pigmented compositions, and metal substrates may be coated with clear or colored compositions, e.g. to improve corrosion resistance or produce spandrel products in accordance with the present invention.

Various hydrolyzable alkoxides and cerium oxide compositions may be combined in a wide range of proportions and concentrations, so long as there is sufficient alkoxide to form an oxide network and sufficient cerium oxide to provide desired improvement in ultraviolet radiation resistance, as measured by the UV absorbance spectrum of the coating on a quartz substrate.

Treatment of a preformed monolith or film of metal oxide formed by metal alkoxide hydrolysis and condensation polymerization is not limited to any particular metal alkoxide sol-gel composition. Various silicon, aluminum, titanium, zirconium and other metal alkoxides and mixtures thereof may be treated with water, inorganic acid, hydrogen peroxide or other suitable aqueous solvent to effect solid-state hydrolysis to an essentially organic-free composition in accordance with the present invention. In some instances where hydrolysis of alkoxides is promoted by a catalyst, it may be desirable to include such a catalyst in the aqueous treatment medium of the present invention. In general, the higher the temperature of the aqueous treatment medium, the faster and more efficient is the removal of residual organic material. In fact, steam may be used to treat gels in accordance with the present invention, and may be particularly useful for treating thin films to produce higher index of refraction, denser materials with greater thermal stability and reduce carbon residue.

The scope of the present invention is defined by the following claims.

## Claims

**1.** A process of manufacturing a composition of matter which process comprises

(a) partially hydrolyzing an organoalkoxysilane having the general formula

$$R_xSi(OR')_{4-x} \qquad (I)$$

wherein R is an organic radical, R' is a low molecular weight alkyl radical and x is at least one and less than 4;

(b) reacting the partially hydrolized organoalkoxysilane of step (a) with one or more metal alkoxides of the general formula

$$M(OR'')_z \qquad (II)$$

wherein M is a metal which forms a hydrolyzable alkoxide, z is the valence of M, and R" is a low molecular weight alkyl radical; and

(c) completely hydrolysing the reaction product of step (b);

with the proviso that said reaction step (b) is being performed before the partially hydrolyzed organoalkoxysilane of step (a) stands so long that condensation reactions proceed to eliminate active silanole groups.

**2.** A process as claimed in claim 1 wherein an additional amount of cerium oxide sol is employed.

## Patentansprüche

**1.** Verfahren zur Herstellung einer Stoffmischung, bei dem man

(a) ein Organoalkoxysilan der allgemeinen Formel

$$R_xSi(OR')_{4-x} \quad (I)$$

teilhydrolysiert, wobei R einen organischen Rest bezeichnet, R' einen niedermolekularen Alkylrest bedeutet und x wenigstens 1 und kleiner als 4 ist;

(b) das teilhydrolysierte Organoalkoxysilan aus der Stufe (a) mit einem oder mehreren Alkoxiden der Formel

$$M(OR'')_z \quad (II)$$

umsetzt, wobei M für ein Metall steht, das ein hydrolysierbares Alkoxid bildet, z die Valenz von M ist und R" einen niedermolekularen Alkylrest bedeutet; und

(c) das Reaktionsprodukt aus der Stufe (b) vollständig hydrolysiert;

mit der Maßgabe, daß die Reaktionsstufe (b) durchgeführt wird, bevor das teilhydrolysierte Organoalkoxysilan der Stufe (a) so lange steht, daß Kondensationsreaktionen stattfinden, um aktive Silanolgruppen zu eliminieren.

**2.** Verfahren nach Anspruch 1, wobei eine zusätzliche Menge Ceriumdioxid-Sol verwendet wird.

## Revendications

**1.** Procédé de préparation d'une composition de matière, procédé qui consiste :

a) à hydrolyser partiellement un organoalcoxysilane ayant la formule générale

$$R_xSi(OR')_{4-x} \quad (I)$$

dans laquelle R est un radical organique, R' est un radical alkyle de faible masse moléculaire et x est au moins 1 et inférieur à 4 ;
(b) à faire réagir l'organoalcoxysilane partiellement hydrolysé de l'étape (a) avec un ou plusieurs alcoxydes métalliques de formule générale

$$M(OR'')_3 \quad (II)$$

dans laquelle M est un métal qui forme un alcoxyde hydrolysable, 3 est la valence de M, et R" est un radical

alkyle de faible masse moléculaire ; et
(c) à hydrolyser complètement le produit de réaction de l'étape (b);

pourvu que ladite étape de réaction (b) soit effectuée avant que l'organoalcoxysilane partiellement hydrolysé ne repose assez longtemps pour que des réactions de condensation ne se produisent en éliminant les groupements silanol actifs.

**2.** Procédé selon la revendication 1, dans lequel on utilise une quantité supplémentaire d'oxyde de cérium.